(19) Europäisches Patentamt
European Patent Office
Office européen des brevets

(11) Publication number: **0 133 210**
**B1**

(12) **EUROPEAN PATENT SPECIFICATION**

(45) Date of publication of patent specification: **21.03.90**

(51) Int. Cl.[5]: **C 02 F 5/10,** C 02 F 5/12, A 23 C 3/07, A 23 L 2/10

(21) Application number: **84107237.4**

(22) Date of filing: **23.06.84**

# (54) Novel scale inhibiting copolymer and method for inhibiting scale deposition.

(30) Priority: **28.06.83 US 508636**
**23.09.83 US 535097**

(43) Date of publication of application:
**20.02.85 Bulletin 85/08**

(45) Publication of the grant of the patent:
**21.03.90 Bulletin 90/12**

(84) Designated Contracting States:
**AT BE CH DE FR GB IT LI LU NL SE**

(56) References cited:
**EP-A-0 011 743**
**DE-A-3 241 811**
**GB-A- 772 775**
**US-A-3 110 666**
**US-A-3 706 717**
**US-A-4 048 065**

(73) Proprietor: **The B.F. GOODRICH Company**
**Dept. 0015 WHB-6 500 South Main Street**
**Akron, Ohio 44318 (US)**

(72) Inventor: **Masler III, William Frank**
**1026 Mattingly Road**
**Hinckley Ohio 44233 (US)**
Inventor: **Amjad, Zahid**
**32611 Redwood Road**
**Avon Lake Ohio 44012 (US)**

(74) Representative: **von Kreisler, Alek, Dipl.-Chem. et al**
**Deichmannhaus am Hauptbahnhof**
**D-5000 Köln 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 133 210 B1

Courier Press, Leamington Spa, England.

**Description**

Background of the Invention

Much effort has been expended to combat the deposition of scale, commonly referred to as "boiler scale", from water onto the inner surfaces of piping and equipment through which the water is flowed. The scale consists primarily of carbonates, phosphates, hydroxides, silicates and sulfates of the alkaline earth metals; particularly calcium and magnesium. The scale is formed due to precipitation which occurs when the ionic product exceeds the solubility product. The problem of scale deposition is intensified at higher temperatures because of the peculiar inverse temperature-solubility characteristics of these alkaline earth metal salts in water. Thus the salts precipitate more readily on the hot surfaces of heat exchangers than on cold, reducing heat transfer rates and deleteriously interfering with circulation of the water.

Until recently, for the most part, the battle to prevent or inhibit the deposition of the alkaline earth metal salts has been abandoned in favour of various mechanical and chemical treatments to remove the scale after it has been deposited. Mechanical scale removal often entails disassembly of equipment and generally subjects that equipment to the risk of mechanical damage by cutting and abrading equipment of various designs. Chemical scale removal cannot be effective without acids which are difficult to handle, and corrosive to the equipment being treated.

Currently inorganic polyphosphates are used extensively to inhibit and prevent scale and deposit formation in aqueous systems, mainly because they are effective in substoichiometric or threshold quantities, and they are relatively inexpensive. By "polyphosphates" we mean phosphates having a molar ratio of metal oxide:$P_2O_5$ in the range from about 1:1 to about 2:1. Their tendency to hydrolyze somewhat unpredictably has initiated their substitution by phosphonc acids and other polyelectrolytes which are stable in aqueous solutions.

When a precipitation inhibitor is present in a potentially scale-forming system at a markedly lower concentration that than required for sequestering the scale forming cation, it is said to be present in "threshold" amounts. See for example, Hatch and Rice, "Industrial Engineering Chemistry", Vol. 31, pg 51 at 53 (Jan. 1939); Reitemeier and Buehrer, "Journal of Physical Chemistry", Vol. 44, No. 5, pg 535 at 536 (May 1940); Fink and Richardson U.S. Patent No. 2,358,222; and Hatch U.S. Patent No. 2,539,305.

Threshold inhibition generally takes place under conditions where a few (that is, 1 to about 10) ppm of polymeric inhibitor will stabilize in solution from about 100 to several thousand ppm of scale-forming mineral. This is distinguished from sequestration because threshold inhibition occurs at substoichiometric ratios of inhibitor to scale-forming cation, whereas sequestration requires a stoichiometric ratio of sequestrant to scale-forming cation to maintain that cation in solution.

It is also known that stoichiometric and substoichiometric quantities of polymers of acrylic acid and methacrylic acid (hereinafter together referred to as "(meth)acrylic acid", and (M)AA for brevity), and (meth)acrylamide, and derivatives of the foregoing, inhibit scale formation in aqueous systems. By stoichiometric amount, we refer to an amount which is sufficient to cause complete complexing with the compound causing scale in water. Hereinafter the term "sequestering" is used to connote use of a composition in stoichiometric amounts, and "threshold" is used to connote use of substoichiometric amounts.

Such polymers are disclosed in U.S. Patents Nos. 2,783,200; 2,980,610; 3,285,886; 3,463,730; 3,514,476; 3,518,204, 3,663,448; 3,709,815; 3,790,610; 3,880,765; 3,928,196; 4,029,577; 4,209,398; 4,324,684; and 4,326,980 inter alia.

Polymers of (M)AA and lower alkenyl carboxylates ("LAC") such as vinyl acetate ('VOAc"); and of (M)AA and lower alkenyl alcohols ("LAOH") such as vinyl alcohol have been made with a wide range of molar ratios for use as binders for molding and core sands, paper coatings, and pigments; as dispersing agents; and, as a warp size for textile manufacture, inter alia. Most copolymers of (M)AA and LAC are essentially insoluble in water as they contain a minor amount of (M)AA, that is, less than 50 moles of (M)AA in 100 moles of monomer mixture forming the copolymer, the remaining major amount being the sum of the other constituent(s) of the copolymer.

It is known that copolymers of (M)AA with certain esters, sometimes in combination with other monomers, provide calcium phosphate inhibition. However, as far as we are aware, there is no teaching that a LAC or a LAOH might be an effective constituent of a polymer in which there is at least 50 moles of (M)AA for 100 moles of monomer mixture forming the copolymer, whether the copolymer is a bipolymer of (M)AA and LAC (or LAOH), or a terpolymer of (M)AA, LAC (or LAOH) and a lower alkenyl sulfonate such as a salt of a lower alkenyl sulfonate ("SLAS"), such as sodium vinyl sulfonate ("SVS"). The term "bipolymer" is used herein to refer specifically to a copolymer of two monomers, namely either (M)AA and LAC, or (M)AA and LAOH, or mixtures of these bipolymers.

It is to be noted that U.S. Patent No. 3,928,196 teaches a copolymer of acrylic acid and 2-acrylamido-2-methylpropanesulfonic acid which copolymer is not a terpolymer. Further, lower N-alkylacrylamido sulfonates are quite different from lower alkenyl sulfonates.

It is particularly surprising that our copolymers are effective for inhibiting scale deposition, for example, of calcium phosphate, even after the copolymers are hydrolyzed so as to form a copolymer in which one of the repeating units is an alcohol and another repeating unit is a carboxylic acid; the more so, because the effectiveness of known calcium phosphate inhibitors is greatly reduced after being subjected

to hydrolytic conditions which convert the unhydrolyzed copolymer to hydrolyzed copolymer which is substantially polyacrylic acid or its salts which have low activity as calcium phosphate inhibitors. Thus there was no reason to assume the products of hydrolysis of our copolymers would be effective to inhibit scale deposition.

Deposits of solid particulate matter also occur from an aqueous medium such as industrial water in which is suspended clay and metal oxides, particularly iron oxide (collectively referred to as "mud" or "sludge"). Such deposits may occur in conjunction with deposits resulting from precipitation of salts ("scale") from the water, or even when no scale is formed. To keep the mud in suspension, industrial water is treated with one or more dispersants or sludge-conditioning agents. Choosing a dispersant which is compatible with a scale inhibitor is not an easy task. It is therefore especially noteworthy that the water treatment disclosed herein is effective not only to inhibit the deposition of scale, but also to disperse mud and keep it in suspension.

We are also unaware of any teaching of a copolymer of (M)AA with an ester which copolymer is substantially the only constituent of an essentially non-crosslinked random copolymer which inhibits the formation and deposition of scale-forming inorganic salts such as calcium phosphate from cow's milk during the pasteurization thereof, calcium phosphate, calcium carbonate and calcium sulfate in open-loop "process water" including cooling water systems, and boiler feed water systems. Such systems are prone to scale-forming precipitation of calcium, magnesium and iron salts, particularly calcium and magnesium phosphates, under presently preferred neutral to alkaline conditions for operating process water systems in industrial applications.

Much interest has been generated by the teachings of U.S. Patents Nos. 3,663,448; 4,029,577; 4,324,664; 4,324,684; and 4,326,980 directed to the efficacy of various (meth)acrylic copolymers in water treatment. For example, the '577 patent to Godlewski et al discloses that a copolymer of (meth)acrylic acid ("(M)AA" for brevity) or salt thereof, and, a hydroxylated lower alkyl acrylate ("HAA") is highly effective in controlling the formation and deposition of scale and/or suspended solid matter which would otherwise occur in aqueous media containing scale-imparting ions and dispersed particles. The ratio of (M)AA:HAA may be as high as 34:1 and as low as 1:4.

In U.S. Pat. No. 3,663,448 (Ralston), the formation of solid scale-forming salts in aqueous solution is inhibited by adding to the solution small amounts of certain amino phosphonate compounds, together with a water soluble polymer having a molecular weight from about 500 to about 12,000 selected from the group consisting of polyacrylic acid, copolymers of acrylic acid and up to 50% acrylamide and polyacrylamide in which at least 50% of the amide groups are hydrolyzed.

U.S. Pat. No. 4,209,398 (Ii et al) discloses yet another water treating process wherein a polymer having a structural unit derived from a monomer having an ethylenically unsaturated bond and having one or more COOH radicals, is combined with inorganic phosphates, phosphonic acids, organic phosphonic acid esters, or polyvalent metal salts, to prevent scale formation and corrosion.

The '664 patent to Snyder teaches that the effectiveness of the '577 water-treating composition is enhanced by the addition of a water soluble ester of an aliphatic sulphodicarboxylic acid. The '684 patent to Geiger et al teaches that a copolymer of the '577 patent may be combined with a water-soluble zinc compound and a water-soluble chromate compound to enhance the corrosion-inhibiting effectiveness of the combination. The '980 patent to Snyder discloses a composition comprising an acrylic acid/lower alkyl hydroxylated acrylate copolymer which is administered to a water system in combination with an alkyl phenoxy polyethoxyethanol compound.

As is well known, in addition to the foregoing references, numerous water-soluble polymers including moieties derived from (meth)acrylamide and (meth)acrylic acid have been used to condition water containing scale-forming compounds, among which references are U.S. Patents Nos. 2,783,200; 2,980,610; 3,285,886; 3,463,730; 3,514,476; 3,518,204; and 3,928,196. None recognized the possibility that (meth)acrylic acid and (meth)acrylamide may each have a well-defined function when they are combined to form a copolymer with an alkoxyalkyl (meth)acrylate ester ("AAE") which, by itself, is essentially insoluble in water; nor, that a copolymer of the three components may be produced in water as the solvent medium for the reaction, so as to save the expense of carrying out the reaction in a non-aqueous medium, then recovering the copolymer and reconstituting it in a desirable aqueous form for shipping.

DE—A—32 41 811 describes a method for inhibiting the deposition of scale for treating process water by using water soluble copolymer which is prepared by reacting acrylic acid an a monomer.

EP—A—O 133 210 discloses a method for inhibiting the deposition of scale in which a terpolymer is used having a special structural formula. Such copolymers are selected from copolymers of an acrylic acid, an acrylamide, and an alkoxy-alkyl acrylate ester; and copolymers of an acrylic acid or a salt thereof, a lower alkenyl carboxylate and optionally a salt of a lower alkenyl sulfonate.

Particularly with respect to the inhibition of $Ca_3(PO_4)_2$ deposits, one might be led to believe from the prior art that poly[(meth)acrylic acid], for brevity, poly[(M)AA], and poly(acrylamide), for brevity poly[(M)Am], might have significant activity, but a copolymer of (M)AA an (M)Am has very little activity. Also, a copolymer of (M)AA and an AAE, or a copolymer of (M)Am and an AAE has very little activity, and an AAE, but itself being essentially insoluble is an unlikely prospect; yet, a random essentially non-crosslinked terpolymer of (M)AA, (M)Am and the AAE has been found to have excellent activity.

Further, in the foregoing closely related prior art, it was uniformly expected that (meth)acrylic acid and

(meth)acrylamide were interchangeable, and that whether one or both were present, had an insubstantial effect on the scale-inhibiting activity (hereafter "activity") of any copolymer in which they were essential moieties. We have found this is not true.

As will presently be evident, (meth)acrylic acid and (meth)acrylamide are not interchangeably usable. They are both essential moieties in our copolymer, and the effectiveness of our copolymer, in addition, is critically dependent on the presence of an APA.

The terpolymer of this invention is particularly useful in cooling water systems including cooling towers, such as referred to in the foregoing prior art patents, in which systems the term "scale" applies to deposits which result from crystallization or precipitation of salts from solution. Scale formation is influenced by the temperature of the water in a particular location, the concentration of the inorganic salts dissolved in that water, the pH of the water, and other factors. It is this scale formation and deposition which is sought to be inhibited.

The current preference for treating cooling water is with a high pH and/or non-chromate corrosion inhibition program which includes phosphates and other salts which lead to the formation of calcium phosphate and other calcium salt deposits. This is equally true of boiler water systems as detailed in the Betz Handbook of Industrial Water Conditioning, 8th Edition, 1980, published by Betz Laboratories, Inc.

Summary of the Invention

It has been discovered that a terpolymer effectively inhibits the deposition of scale due particularly to calcium phosphate, and magnesium phosphate formed in a system for treating process water, when the copolymer is added to the water in a small amount sufficient to obtain the desired level of inhibition.

In the particular embodiment, the method of this invention is practiced with a terpolymer having the structural formula

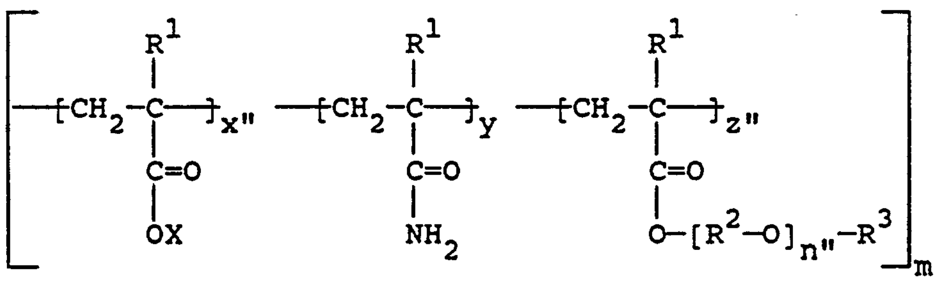

(I)

wherein X is selected from the group consisting of H, $NH_4$, an alkali metal, selected from the group consisting of sodium and potassium;

$R^1$ represents H or methyl;

$R^2$ represents an alkylene group having from 2 to 4 carbon atoms;

$R^3$ represents an alkyl group having from 1 to about 10 carbon atoms;

n'' is an integer in the range from 2 to 6; and,

m is an integer in the range from about 3 to 70.

The terpolymers represented by the structure (I) appear to be non-toxic to humans when used in animal's milk in a small amount in the range from about 0.05 to about 10 ppm, more preferably from about 0.1 to about 1 ppm, and the milk is pasteurized in conventional equipment used to process milk for human consumption; when so used they control the deposition of calcium phosphate on surfaces of equipment used to process milk.

The process of this invention utilizes terpolymer (I) in which (M)AA is esterified with an alkoxylated lower primary alcohol ("APA") and subsequently polymerized under controlled conditions. Formation of the APA is effected by reaction of an excess of a lower alkylene oxide having from 2 to about 6 carbon atoms, most preferably one selected from the group consisting of ethylene oxide, propylene oxide and butylene oxide, with a lower primary alcohol having from 1 to about 10 carbon atoms, in the presence of selected hydroxyalkylation catalysts. These catalysts are well known and include sodium hydroxide, pyridine, tetramethylammonium chloride, trimethylbenzyl ammonium chloride and 2,6-lutidine. Most preferred is AA esterified with ethoxytriglycol and may also include minor amounts of various polyalkoxylated alcohol which esters contain from 4 to about 6 carbon atoms.

Typically, from about 0.2 to about 5 parts by weight of initiator per 100 parts of (M)AA monomer are used, preferred initiators being acetyl benzoyl peroxide, peracetic acid, hydroxyheptyl peroxide, isopropyl peroxydicarbonate, methyl ethyl ketone peroxide, cyclohexane peroxide, cyclohexyl hydroperoxide, 2,4-dichlorobenzoyl peroxide, cumene hydroperoxide, t-butyl hydroperoxide, methyl amyl ketone peroxide, acetyl peroxide, lauroyl peroxide, benzoyl peroxide, caprylyl peroxide, methyl cyclohexyl hydroperoxide, t-butyl permaleic acid, t-butyl perbenzoate, di-t-butyl diperphthalate, azobis-isobutyronitrile, the so-called redox and heavy metal polymerization initiators and the like, and others. The terpolymer is usually formed in high conversion, usually in excess of 90% conversion and often as high as 95 to 100%.

The reaction for preparing terpolymer (I) is most preferably carried out in water as the only medium at a temperature in the range from above about 30°C to about 130°C usually at atmospheric, or slightly

elevated pressure. Though the solubility of the AAE in water is poor, the water appears to dissolve the (M)AA and (M)Am first, forming a solution which dissolves the AAE relatively readily allowing the reaction to proceed smoothly. Thus, the concentration of the terpolymer formed may range from about 25% to about 40% by wt, based on total solids, which is a solution which may be shipped directly.

The effectiveness of the composition (I) is attributable to the critical presence of the (M)Am and AAE in the amounts stated. Too large a proportion of (M)Am or AAE adversely effects the performance of the composition.

The terpolymers (I) may also be formed in an acyclic ketone such as acetone, or in an acyclic ester such as ethyl acetate, or in xylene or toluene. If, for example, the terpolymer (I) is formed in isopropanol, or a mixture of isopropanol and water, the terpolymer is converted from the alcohol solution to a water solution. Typically, the alcohol is stripped from the solution with steam, or distilled off with subsequent additions of water and repetition of distillation to remove the alcohol, followed by the addition of water and a neutralizing agent such as caustic solution, ammonia, a hydrazine or a low-boiling primary, secondary or tertiary aliphatic amine.

The final aqueous solution of polymer salt is preferably in the range from about pH 5 to about pH 8, and more preferably in the range of pH 6—7, with a total solids content of from about 2 to about 60 percent by weight and preferably from about 5 to about 50 percent by weight of polymer in water.

The terpolymers (I) formed may have a weight average molecular weight $\overline{Mw}$ in the range from 2000 to 50,000, and preferably from about 3000 to about 20,000; the terpolymers (I) formed may have have a $\overline{Mw}$ in the range from about 1000 to about 25,000, and preferably from about 2000 to about 10,000 as determined by gel permeation chromatography. This determination is conventionally made according to ASTM method D—3536—76 (see ASTM Standards, Part 35, 1980), by dissolving the esterified terpolymer (as in *J. Polym. Sci., Polym. Chem. Ed.,* 1976, Vol 14, pg 14) in tetrahydrofuran and comparing with a solution in THF of polystyrene of known molecular weight. The acid numbers of the terpolymers (I) formed, as determined by a conventional titration with KOH, may range from about 235 to about 585, corresponding to a weight fraction of from 30% to about 75% by wt of monomer units having COOH groups. The preferred polymers (I) have more than 30% by wt of free carboxyl groups expressed as "% acrylic acid", and an acid number in the range from about 400 to about 500.

In a typical polymerization process, a glass lined or stainless steel jacketed reactor is charged with predetermined amounts of monomers along with the polymerization catalyst under a nitrogen blanket, and the reaction mixture allowed to rise in temperature due to the exothermic reaction under controlled temperature conditions maintained by a heat-transfer fluid in the jacket of the reactor. The pressure under which the reaction occurs is not critical, it being convenient to carry it out under atmospheric pressure.

Example 1

Preparation of a copolymer of acrylic acid (AA) and vinyl acetate (VOAc):

A 37.85 liter reactor was charged with 14.29 kg isopropanol, and 2.72 kg of water, and brought to reflux under a $N_2$ atmosphere. While refluxing the solvent a mixture of 3.07 kg AA and 2.268 kg VOAc, and separately, 0.155 kg Lupersol® 11, are concurrently metered into the reactor, slowly. The reaction is allowed to proceed for about an hour after all the catalyst is metered, and then the isopropanol is stripped from the reaction mixture. Water is added to yield about 40% solids in the product.

In an analogous manner, copolymers are formed by substituting 2-propenyl acetate for vinyl acetate. Similarly, methacrylic acid may be used instead of, or in addition to acrylic acid; and, 2-propenyl acetate may be used instead of or in addition to, vinyl acetate. As one skilled in the art will readily appreciate, the molecular weights of the copolymers formed will vary in accordance with the proportions of monomers charged to the reaction flask, and also with the precise conditions of polymerization.

With respect to the polymerization reaction, it will be appreciated that it is essential to maintain the temperature of the reaction mass during polymerization in a suitable temperature range, preferably from about 50°C to about 130°C, and to do this, suitable means are provided to maintain the desired temperature in the polymerization reactor. This is most conveniently done by allowing the reaction mass to heat to reflux autogenously, or heating it if necessary, under substantially atmospheric pressure, though elevated pressure in the range from 1 to about 5 atm. may be used if desired, then cooling the reactor with appropriate heat exchange means, preferably with a reflux condenser. Additionally, a cooling jacket and internal heat exchange coils may be provided in the reactor.

Testing for inhibition of scale due to calcium phosphate:

The copolymers formed in each of the foregoing examples, and several others, are used to treat water which contains calcium ions and phosphate ions in a stirred pH-STAT test (maintaining constant pH using an automatic titrator) to gauge the effectiveness of the polymer for inhibiting the formation and deposition of calcium phosphate.

A known volume of phosphate salt such as $Na_2HPO_4$ or other soluble phosphate salt solution was transferred to a known volume of distilled water in a double-walled glass cell, to give a final concentration of 9—10 ppm of orthophosphate ions. To this solution was added slowly and with continuous stirring a known volume of testing polymer solution sufficient to give a dosage of 10 ppm. A pair of glass and reference electrodes, which was calibrated before and after each experiment with standard buffer solutions

(pH 7.00 and 9.00), and was then immersed in the solution which was maintained at 50°C by circulating water through the outside of a glass cell jacket. After about 45 min a known volume of calcium chloride solution was slowly added to the continuously stirred (350 rpm) solution containing phosphate and polymer, to give a final calcium ion concentration of 140 ppm. The pH of the solution was then immediately brought to pH 8.50 by automatic addition of 0.10 M NaOH solution. The pH of the solution was then maintained to 8.50±.01 throughout the experiments using the pH-stat technique (see *Caries Res 13*, 250—258, 1979). Solution samples were withdrawn after 1 hr, and 22 hr, and analyzed, after filtration through 0.22 micrometer filter paper, for orthophosphate ions using the ascorbic acid method as described in detail in "Standard Methods for the Examination of Water and Waste Water" 14th edition, prepared and published jointly by American Health Association et al. The instrument used for the colorimetric measurements was a Beckman 5270 Spectrophotometer.

Tests for calcium sulfate and calcium carbonate was carried out by the method of Ralston (see *J. Pet. Tech.*, August 1969, 1029—1036).

Testing for inhibition of scale due to magnesium hydroxide:

A supersaturated solution of $Mg(OH)_2$ in water is prepared which contains about the following concentrations: $Mg^{++}$ = 19 mg/l, $OH^-$ = 27 mg/l, and NaCl = 3.8%. To a 100 ml quantity of the supersaturated solution is added 5 ppm of polymer and the solution stored in polyethylene bottles in an air convection oven at 66°C for 24 hr. The solution is then filtered through 0.22 micron Millipore filter paper and the filtrate analyzed for Mg.

Threshold inhibition data for the polymers of this invention and for several standards with respect to the above mineral scales are summarized in Table I herebelow.

## Example 2

Preparation of a copolymer of acrylic acid (AA), vinyl acetate (VOAc), and sodium vinyl sulfonate (SVS):

In a manner analogous to that described in example 1 hereinabove, 12.474 kg of AA, 6.8 kg of VOAc and 3.4 kg of SVS were charged to the reactor with sufficient catalyst to yield a desirable polymer, and the polymerization carried out as set forth hereinabove. The product obtained contained about 40% by wt solids. In an analogous manner, sodium isopropenyl sulfonate is used to form a terpolymer with MAA and VOAc. As before, the mol wts may be varied in accordance with the proportions of the monomers charged, but most preferred are terpolymers having a mol wt in the range from about 5000 to about 8000 and which contain about 60 parts by weight, or more, of (M)AA per 100 parts of terpolymer.

Testing for effectiveness as a dispersing agent ("dispersant activity"):

Dispersant activity is measured as a function of time for a particular concentration of polymeric dispersant which is to be tested as a dilute solution in water. In this test 5.0 g of natural kaolin powder from Holmes County Ohio, which powder is smaller than 0,25 mm (60 mesh), U.S. Standard Sieve Series, is added to a 100 ml graduated cylinder containing 100 ml of the polymer solution at the test concentration (2 ppm). The pH of the slurry is adjusted to 6.2—6.9 with dilute NaOH or HCl if required and the slurry is then slowly shaken by hand for about 60 sec. The graduates as allowed to stand and the volume of dispersed solids is recorded as a function of time, reading the numbered graduations directly. The higher the volume of dispersed solids (the larger the number), the more efficient is the dispersing agent.

In addition to the concentration of the particular dispersant in the suspension, the pH, the size and the size distribution of the particles, there are several other factors which influence the dispersant activity, among which factors are the type of solid particles held in the suspension, their surface area, the presence of additional solutes, the temperature, the degree of agitation initially provided, inter alia.

Accordingly, this test is repeated each time the dispersant activity of various polymers is to be compared at a preselected concentration (2 ppm) at room temperature 22°C (72°F) at a pH in the range 6.2—6.9, thus keeping all variables except the dispersant, substantially invariant.

After initially shaking the suspension by hand for from 30—60 sec in a 100 ml graduated cylinder, it is allowed to stand and a beam of light is directed from above the cylinder so as to pass longitudinally axially through the suspension. Where the beam's path appears to be effectively blocked, an interface is deemed to exist which separates relatively clear suspension from relatively opaque suspension. The greater the depth of the relatively clear supernatant, the further the beam travels. The larger the volume of opaque suspension, the more effective is the dispersant activity.

In addition to the relatively clear volume, and the relatively opaque volume, there is a "settled volume" of solid particles which forms a packed bed in the bottom of the graduate (hence the term "settled volume"). This settled volume, of course, will be opaque to the light beam but is not taken into consideration for the purposes of determining the relatively opaque volume referred to hereinabove. The settled volume is determined by making a reading of the bed volume with the naked eye.

In the following Table II, a suspension with no polymer ("blank") has a settled volume of 9.5 ml after 22 hr. With *Good-rite® K—732 poly(AA) one gets a settled volume of 8 ml after 22 hr, the other dispersants having the values given. A good dispersant deflocculates or deagglomerates the particles in suspension thus dispersing small particles which, when they finally settle, will pack more densely than larger particles, thus will give a smaller settled volume.

The results are set forth in Table II as two numbers separated by a 'slash', thus, 91/4.5, the first number indicating the reading on the graduate at the interface between the relatively clear supernatant and the opaque dispersed clay suspension, the second number indicating the reading for the settled volume.

A study of the results tabulated herebelow indicates that K—732 poly [(AA)] having a mol wt of about 5100 has the smallest settled volume after 170 min, and that the compositions used in this invention are comparable to commercial poly[(AA)] such as Good-rite® K-732 and Good-rite® K—752.

Examples 23—33

Preparation of a copolymer of acrylic acid (AA), acrylamide (Am) and ethoxytriglycol acrylate (EOTGA):

A round-bottomed flask was charged with 30 g acrylic acid, 16.34 g of a 48.6% solution in water of acrylamide, 10 g ethoxytriglycol acrylate, 0.001 g ferrous sulfate, 3.5 g mercaptopropionic acid, and 102 ml of water. The flask was flushed with nitrogen and then 2 ml of 90% t-butylhydroperoxide was injected via a syringe. The solution rapidly exothermed to reflux. The solution in the flask containing polymer was heated at reflux for 2 hr and then cooled. The product obtained weighed 161.4 g and contained 31.8% by weight solids.

In an analogous manner, copolymers are formed by substituting methoxy triglycolacrylate, propoxytriglycolacrylate and butoxytriglycol acrylate for the ethoxytriglycol acrylate. Similarly, methacrylic acid may be used instead of, or in addition to acrylic acid; and, methacrylamide may be used instead of, or in addition to acrylamide to form copolymers with the foregoing AAEs to provide compositions with excellent activity. As one skilled in the art will readily appreciate, the molecular weights of the copolymers formed will vary in accordance with the proportions of monomers charged to the reaction flask, and also with the precise conditions of polymerization.

It will be evident that the value of n in the repeating unit of AAE of the foregoing copolymers is 3, and it is found that most preferred copolymer molecules have n in the range from 2 to about 4. With respect to the polymerization reaction, it will be appreciated that it is essential to maintain the temperature of the reaction mass during polymerization in a suitable temperature range, preferably from about 50°C to about 130°C, and to do this, suitable means are provided to maintain the desired temperature in the polymerization reactor. This is most conveniently done by allowing the reaction mass to heat to reflux autogenously, or heating it if necessary, under substantially atmospheric pressure, though elevated pressure in the range from 1 to about 5 atm. may be used if desired, then cooling the reactor with appropriate heat exchange means, preferably with a cooling jacket. Additionally, internal heat exchange coils may be provided in the reactor.

The copolymers formed in each of the foregoing examples, and several others, are used to treat water which contains calcium ions and phosphate ions in a static test to gauge the effectiveness of the polymer for inhibiting the formation and deposition of calcium phosphate, as follows: A phosphate salt such as $Na_2HPO_4$ or other soluble phosphate is dissolved in water to provide a concentration of 13.3 ppm of $PO_4^{-3}$ ions, and a soluble calcium salt such as calcium chloride is also dissolved in the water to provide a $Ca^{++}$ion conc. of 110 ppm. To this solution is added the terpolymer in an amount sufficient to provide a dosage of 10 ppm.

100 ml of this solution containing 10 ppm of terpolymer is poured into each of three clean 4 oz glass bottles and the pH is adjusted to 8.4 with NaOH. The bottles are placed in a water bath set at 50°C and allowed to equilibrate for 5 hours. The temperature is chosen because it closely approximates cooling tower process water temperatures in summer in the northern U.S. The precipitation of calcium phosphate is so rapid that equilibration for more than 5 hours does not substantially change the results obtained with 5 hr.

The bottles are removed from the water bath and the contents filtered through a 0.2 micron millipore filter. The filtrate is allowed to cool to room temperature (20°C) and then analyzed for $PO_4^{-3}$ using the ascorbic acid method as described in detail in "Standard Methods for the Examination of Water and Wastewater" 14th edition, prepared and published jointly by American Public Health Association et al. The instrument used for the colorimetric measurements was a Beckman 5270 Spectrophotometer. The results of the tests are set forth in Table III which follows:

TABLE I

| Ex. No. | Polymer | Mol ratio monomers | Wt. ratio monomers | Mol. Wt. (approx) | %inhibition [1] $Ca_3(PO_4)_2$ after 1 hr | [1] $Ca_3(PO_4)_2$ after 22 hr | [2] $CaCO_3$ | [3] $CaSO_4$ | [4] $Mg(OH)_2$ |
|---|---|---|---|---|---|---|---|---|---|
| 1 | poly[(AA)(VOAc)] * | 10.75: 1 | 90:10 | 5000 | 43 | 25 | 84 | 98 | 33 |
| 2 | " | 4.78: 1 | 80:20 | 5000 | 92 | 86 | 74 | 97 | 34 |
| 3 | " | 2.79: 1 | 70:30 | 5000 | 87 | 85 | 56 | 98 | 32 |
| 4 | " | 1.79: 1 | 60:40 | 5000 | 43 | 22 | 50 | 99 | 29 |
| 5 | " | 4.78: 1 | 80:20 | 2200 | 59 | 26 | 41 | 98 | |
| 6 | " | 4.78: 1 | 80:20 | 9800 | 86 | 70 | 75 | 52 | |
| 7 | poly[(AA)] | | | 2100 | 27 | 16 | 79 | 99 | |
| 8 | " | | | 5100 | 20 | 12 | 68 | 66 | |
| 9 | poly[(VOAc)] | | | 5000 | 0 | 0 | | | |
| 10 | poly[(AA)(VOAc)(SVS)] | 2.19: 1 :0.33 | 55:30:15 | 5000 | 83 | 85 | 43 | 54 | |
| 11 | poly[(MAA)(VOAc)] | 4 : 1 | 80:20 | 5000 | 16 | 12 | 51 | 7 | |
| 12 | poly[(AA)(VOAC)] ** | 4.78: 1 | 80:20 | 4500 | 28 | 14 | 76 | 99 | 31 |
| 13 | " | 2.79: 1 | 70:30 | 4250 | 78 | 20 | 62 | 99 | 25 |
| 14 | ***Natrol-42 | 3 : 1 | 63:37 | | 48 | 36 | 50 | 49 | |

[1] Conditions: $[Ca^{++}]$ = 140 ppm; $[PO_4^{-3}]$ = 9.2 ppm; pH = 8.50±0.01; T = 50°C; time = 1 hr and 22 hr; 10 ppm polymer.

[2] Conditions: $[Ca^{++}]$ = 110 ppm; $[HCO_3^{-1}]$ = 760 ppm as $HCO_3^-$; $[CO_3^{-2}]$ = 18 ppm as $CO_3^=$; T = 66°C; time = 24 hr; 3 ppm polymer.

[3] Conditions: $[Ca^{++}]$ = 2000 ppm; $[SO_4^{-2}]$ = 4800 ppm; T = 66°C; time = 24 hr; 2 ppm polymer.

[4] Conditions: $[Mg^{++}]$ = 19 ppm; $[OH^-]$ = 27 ppm; NaCl = 3.8%; T = 66°C; time = 24 hr; 5 ppm polymer.

* unhydrolyzed polymer

** essentially completely hydrolyzed copolymer

***more fully described in U.S. Patent No. 4,029,577.

TABLE II

| Ex. No. | Polymer | Weight ratio of monomers | Mol. Wt. (approx.) | Time 11 min | 21 min | 90 min | 170 min | 22 hr |
|---|---|---|---|---|---|---|---|---|
| 15 | poly[(AA)(VOAc)] * | 80:20 | 5000 | 91/4.5 | 91/6 | 82/9 | 74/9 | 38/9 |
| 16 | poly[(AA)(VOAc)] ** | 80:20 | 4500 | 70/30 | 60/13 | 0/10 | - | 0/9.5 |
| 17 | poly[(AA)(VOAc)(SVS)] * | 55:30:15 | 5000 | 92/5.5 | 90/6 | 84/7 | 79/8 | 38/9.5 |
| 18 | poly[(AA)] K-732[1] | - | 5100 | 93/8 | 87/7.5 | 81/7 | 79/7 | 56/8 |
| 19 | poly[(AA)] K-752[1] | - | 2100 | 0/35 | 0/12 | 0/ - | - | 0/8.5[+] |
| 20 | poly[(AA)] K-722[1] | - | 170,000 | 0/14 | 0/12 | 0/10.5 | 0/10.5 | 0/10.5 |
| 21 | poly[(AA)] LMW-45X[2] | - | 9000 | 0/15 | 0/13 | 0/11 | - | 0/10.5 |
| 22 | blank | - | - | 35/ - | 0/15 | 0/11 | 0/10 | 0/9.5 |

[1]from The B.F.Goodrich Company

[2]from Rohm & Haas Co.

[+]after 15.5 hr.

*unhydrolyzed copolymer

**essentially completely hydrolyzed copolymer

TABLE III

| Ex. No. | Polymer | Molar ratio of monomers | Weight ratio of monomers | Mol. Wt. (approx.) | % inhibition [1]$Ca(PO_4)_3$ | [2]$CaCO_3$ | [3]$CaSO_4$ |
|---|---|---|---|---|---|---|---|
| 23 | poly[AA] | | | 2100 | 34 | 73 | 100 |
| 24 | poly[AA] | | | 5100 | 22 | 63 | 82 |
| 25 | poly[Am] | | | 5000 | 0 | 3 | |
| 26 | poly[AA/Am] | 0.11:1 | 10:90 | 4500 | 6 | 9 | 4 |
| 27 | - id - | 18.7:1 | 95:5 | 4100 | 10 | 70 | 85 |
| 28 | - id - | 0.81:1 | 45:55 | 4500 | 10 | 70 | 85 |
| 29** | poly[AA/Am/EOTGA] | 3.91:1:0.40 | 63:16.5:20.5 | 4000 | 67 | 45 | 95 |
| 30** | - id - | 6.9:1:0.61 | 70:10:20 | 4000 | 39 | 72 | 42 |
| 31** | - id - | 7.89:1:0.306 | 80:10:10 | 4000 | 36 | 69 | 42 |
| 32** | - id - | 0.99:1:0.068 | 45:45:10 | 4000 | 11 | 34 | 55 |
| 33 | *Natrol 42$^R$ | | | | 23 | 10 | 5 |

[1]Conditions: $[Ca^{++}]$ = 110 ppm; $[PO_4^{-3}]$ = 13.2 ppm; pH = 8.40±0.05; T = 50°C; time = 5 hr.
[2]Conditions: $[Ca^{++}]$ = 110 ppm; $[HCO_3^{-1}]$ = 760 ppm as $HCO_3^-$; $[CO_3^{-2}]$ = 18 ppm as $CO_3^=$; T = 66°C; time = 24 hr.
[3]Conditions: $[Ca^{++}]$ = 2000 ppm; $[SO_4^{-2}]$ = 4800 ppm; T = 66°C; time = 24 hr.
*more fully described in U.S. Patent No. 4,029,577; the relatively poor activity demonstrated is apparently attributable to the particular commercial sample (order No. 62443) used.
**Examples according to the present invention.

The foregoing examples are directed to threshold inhibitions in typical cooling water process streams. However, other process water streams which contain concentrations of ions far in excess of typical cooling water streams may also be effectively treated for scale inhibition with the terpolymers of our invention in concentrations from about 5 ppm to about 200 ppm, and in some instances as high as 500 ppm where the cost is justified. Such other process water streams include brine solutions such as are processed in desalination plants, particularly in the multiple evaporators thereof; and in brackish waters containing a high concentration of salts such as are typically encountered in membrane devices for reverse osmosis processes. Still other process water uses are in various oil field applications for scale inhibition in conduits circulating saline and oily water, where the water is present in a major amount by weight, most particularly in secondary oil recovery operations.

It has also been found that terpolymers of our invention appear to be non-toxic to humans when used in animal's milk and in fruit juices in a small amount in the range from about 0.05 to about 10 ppm, more preferably from about 0.1 to about 1 ppm. Thus milk containing terpolymer in an amount sufficient for inhibiting the deposition of scale on the surfaces of pasteurizing equipment is found highly suitable for minimizing maintenance and shutdowns in milk processing plants. In an analogous manner, our terpolymers may be used to inhibit the deposition of scale inside equipment used to process the sucrose and other sugar-containing juice extracted from various fruits, particularly the juice extracted by crushing and pressing sugar cane and sugar beets.

It will further be noted that the examples illustrate the use of unhydrolyzed polymer and of essentially fully hydrolyzed polymer. However, the degree to which hydrolysis is effected may be controlled if a particular degree of hydrolysis is desired. Typically the value of p may be controlled within the range from about 0.01 to about 0.5 when y is in the range from 0.5 to 0.9. In an analogous manner, when z is greater than zero and is represented by z' in the range from 0.1 to about 1.0, the degree of hydrolysis, and thus the value of p may also be controlled in the range from 0.01 to about 0.5 for each y. When z' is in the range specified, the numerical value of x will still range from about 2.5 to about 15.0 times the amount of y present.

**Claims**

1. Method for inhibiting the deposition of scale due particularly to calcium phosphate and magnesium phosphate formed in a system for treating process water from a process water system selected from steam generating system, recirculating cooling water system, gas scrubbing system and brine or brackish water treating system characterized in that the system is admixed with an amount of from 2 ppm to 200 ppm of a water-soluble, essentially non-crosslinked random copolymer having the general formula (I)

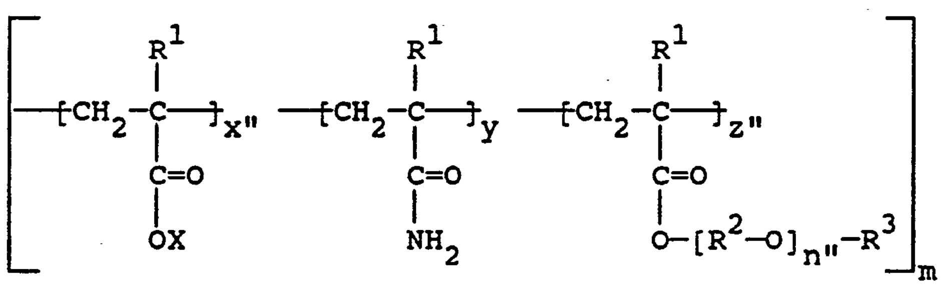

(I)

wherein

X represents H, $NH_4$ or an alkali metal selected from the group consisting of sodium and potassium,
$R^1$ represents H or methyl,
$R^2$ represents an alkylene group having from 2 to 4 carbon atoms,
$R^3$ represents an alkyl group having from 1 to 10 carbon atoms,
m is an integer in the range from 3 to 70,
n'' is an integer in the range from 2 to 6,
y is 1,
x'' is a number in the range of from 1 to 8,
z'' is a number in the range of from 1 to 0.075 and whereby the groups having the indices x'', y and z''r'' are present in a relative heterogeneous order.

2. A method according to claim 1, characterized in that a copolymer having the general formula (I) is used wherein

X represents Na,
$R^1$ represents H and
$R^2$ represents an ethylene group.

3. A method of treating a system for pasteurizing milk, characterized in that the system for pasteurizing milk is admixed with 0.05 ppm to 10 ppm of a water-soluble essentially non-crosslinked random copolymer having the general formula (I) indicated in claim 1.

4. A composition for treating a predominantly aqueous system to inhibit the deposition of precipitates selected from the group consisting of calcium phosphate, calcium carbonate, calcium sulfate, barium sulfate, magnesium phosphate, magnesium hydroxide, calcium silicate, magnesium silicate, iron oxide, zinc hydroxide, zinc phosphate, calcium fluoride, calcium oxalate and mixtures thereof, characterized in that said composition comprises a copolymer of

a) acrylic acid or methacrylic acid,

b) acrylamide or methacrylamide and

c) an alkoxyalkyl acrylate ester or alkoxyalkyl methacrylate ester having the general formula (I)

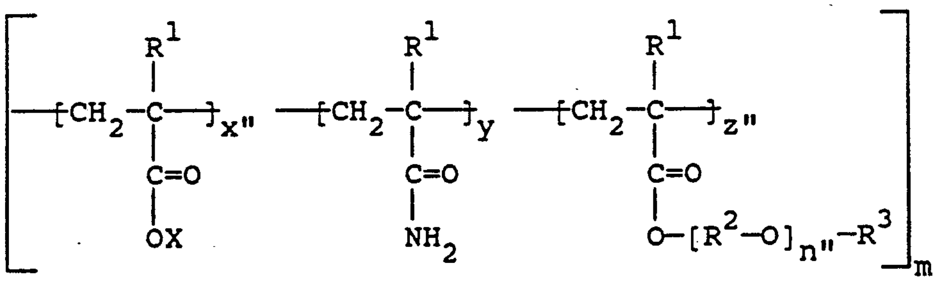

(I)

wherein

X represents H, $NH_4$ or an alkali metal selected from the group consisting of sodium and potassium.

$R^1$ represents H or a methyl group,

$R^2$ represents an alkylene group having from 2 to 4 carbon atoms,

$R^3$ represents an alkyl group having from 1 to 10 carbon atoms,

n'' is an integer in the range from 2 to 6,

m is an integer in the range from 3 to 70,

x'' is a number in the range of from 1 to 8,

y is 1,

z'' is a number in the range of from 1 to 0.075 and whereby the groups having the indices x'', y and z'' are present in a relative heterogeneous order.

5. A composition according to claim 4, characterized in that the copolymer is represented by the general formula (I) wherein

$R^1$ represents H,

$R^2$ represents an ethylene group and

$R^3$ represents an ethyl group.

6. A composition according to claims 4 and 5, characterized in that said copolymer has a molecular weight in the range of from 2000 to 50000.

7. A composition according to claims 4 to 6, characterized in that it is in the form of an aqueous solution of the copolymer having a total solids content in the range of 2 to 60% by weight has a pH value in the range of 5 to 8.

8. Use of the composition of claims 4 to 7 for treating process water in a recirculating water system.

9. Use of the composition of claims 4 to 7 for treating milk prior to being pasteurized.

**Patentansprüche**

1. Verfahren zur Hemmung der Abscheidung von Sinterniederschlag, der insbesondere durch Calciumphosphat und Magnesiumphosphat in einem System zur Behandlung von Prozeßwasser aus einem Prozeßwasser-System gebildet wird, das aus einem Dampferzeugungssystem, einem Kühlwasserumlaufsystem, einem Gaswaschsystem und einem Behandlungssystem für Salzlösung oder Brackwasser ausgewählt ist, dadurch gekennzeichnet, daß das System mit einer Menge von 2 ppm bis 200 ppm eines wasserlöslichen, im wesentlichen unvernetzten, statistischen Copolymers mit der allgemeinen Formel (I)

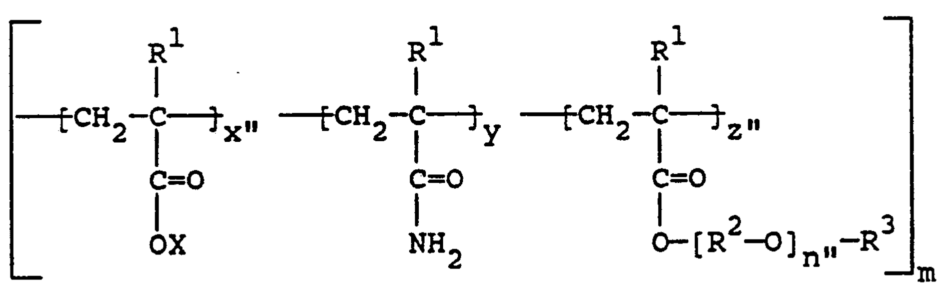

(I)

vermischt wird, in der

X H, $NH_4$ oder ein aus der aus Natrium und Kalium bestehenden Gruppe ausgewähltes Alkali-Metall bezeichnet,

$R^1$ H oder Methyl bezeichnet,
$R^2$ eine Alkylen-Gruppe mit 2 bis 4 Kohlenstoff-Atomen bezeichnet,
$R^3$ eine Alkyl-Gruppe mit 1 bis 10 Kohlenstoff-Atomen bezeichnet,
m eine ganze Zahl im Bereich von 3 bis 70 ist,
n'' eine ganze Zahl im Bereich von 2 bis 6 ist,
y 1 ist,
x'' eine Zahl im Bereich von 1 bis 8 ist,
z'' eine Zahl im Bereich von 1 bis 0,075 ist und wobei die Gruppen mit den Indices x'', y und z'' in einer relativ heterogenen Ordnung vorliegen.

2. Verfahren nach Anspruch 1, dadurch gekennzeichnet, daß ein Copolymer mit der allgemeinen Formel (I) verwendet wird, in der
X Natrium bezeichnet,
$R^1$ H bezeichnet und
$R^2$ eine Ethylen-Gruppe bezeichnet.

3. Verfahren zur Behandlung eines Systems zum Pasteurisieren von Milch, dadurch gekennzeichnet, daß das System zum Pasteurisieren von Milch mit 0,05 bis 10 ppm eines wasserlöslichen, im wesentlichen unvernetzten, statistischen Copolymers mit der in Anspruch 1 angegebenen allgemeinen Formel (I) vermischt wird..

4. Zusammensetzung zur Behandlung eines vorherrschend wäßrigen Systems zur Hemmung der Abscheidung von Niederschlägen, die aus der aus Calciumphosphat, Calciumcarbonat, Calciumsulfat, Bariumsulfat, Magnesiumphosphat, Magnesiumhydroxid, Calciumsilicat, Magnesiumsilicat, Eisenoxid, Zinkhydroxid, Zinkphosphat, Calciumfluorid, Calciumoxalat und deren Mischungen bestehenden Gruppe ausgewählt sind, dadurch gekennzeichnet, daß die Zusammensetzung ein Copolymer aus
a) Acrylsäure oder Methacrylsäure,
b) Acrylamid oder Methacrylamid und
c) einem Alkoxyalkylacrylat-ester oder Alkoxyalkylmethacrylat-ester der allgemeinen Formel (I)

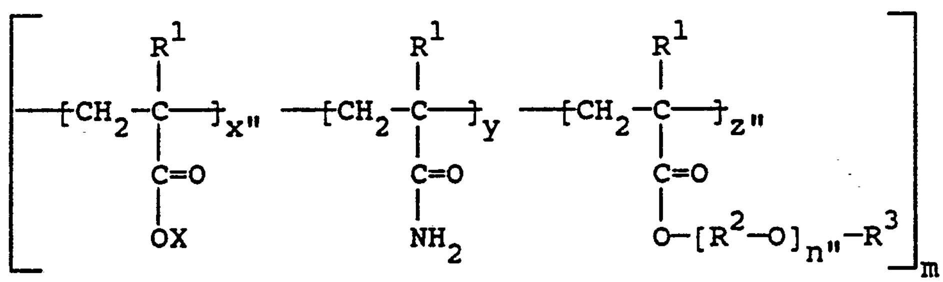

(I)

umfaßt, in der
X H, $NH_4$ oder ein aus der aus Natrium und Kalium bestehenden Gruppe ausgewähltes Alkali-Metall bezeichnet,
$R^1$ H oder Methyl bezeichnet,
$R^2$ eine Alkylen-Gruppe mit 2 bis 4 Kohlenstoff-Atomen bezeichnet,
$R^3$ eine Alkyl-Gruppe mit 1 bis 10 Kohlenstoff-Atomen bezeichnet,
m eine ganze Zahl im Bereich von 3 bis 70 ist,
n'' eine ganze Zahl im Bereich von 2 bis 6 ist,
y 1 ist,
x'' eine Zahl im Bereich von 1 bis 8 ist,
z'' eine Zahl im Bereich von 1 bis 0,075 ist und wobei die Gruppen mit den Indices x'', y und z'' in einer relativ heterogenen Ordnung vorliegen.

5. Zusammensetzung nach Anspruch 4, dadurch gekennzeichnet, daß das Copolymer durch die allgemeine Formel (I) dargestellt wird, in der
$R^1$ H bezeichnet,
$R^2$ eine Ethylen-Gruppe bezeichnet und
$R^3$ eine Ethyl-Gruppe bezeichnet.

6. Zusammensetzung nach den Ansprüchen 4 und 5, dadurch gekennzeichnet, daß das Copolymer ein Molekulargewicht im Bereich von 2000 bis 50000 hat.

7. Zusammensetzung nach den Ansprüchen 4 bis 6, dadurch gekennzeichnet, daß sie in Form einer wäßrigen Lösung des Copolymers mit einem Gesamt-Feststoff-Gehalt im Bereich von 2 bis 60 Gew.-% vorliegt, die einen pH-Wert im Bereich von 5 bis 8 hat.

8. Verwendung der Zusammensetzung nach den Ansprüchen 4 bis 7 zur Behandlung von Prozeßwasser in einem Umlaufwasser-System.

9. Verwendung der Zusammensetzung nach den Ansprüchen 4 bis 7 zur Behandlung von Milch vor dem Pasteurisieren.

## Revendications

1. Procédé pour inhiber le dépôt de tartre, dû en particulier au phosphate de calcium et au phosphate de magnésium, formé dans un circuit pour le traitement de l'eau de procédé provenant d'un circuit d'eau de procédé choisi parmi les circuits de production de vapeur, les circuits d'eau de refroidissement de recyclage, les circuits de lavage des gaz et les circuits de traitement des saumures ou des eaux saumâtres, caractérisé en ce que l'on introduit dans le circuit une quantité de 2 ppm à 200 ppm d'un copolymère statistique soluble dans l'eau, essentiellement non-réticulé, ayant la formule générale (I)

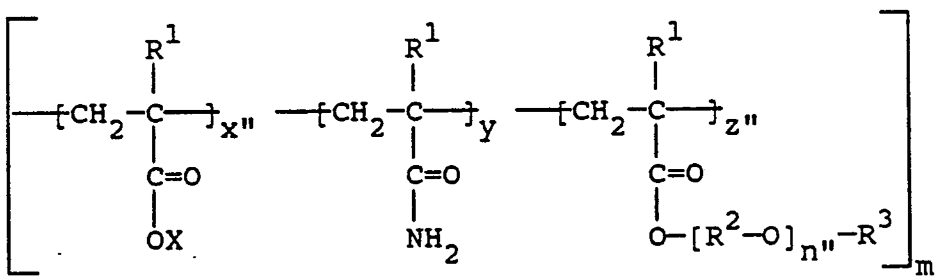

(I)

dans laquelle

X représente H, $NH_4$ ou un métal alcalin choisi dans le groupe comprenant le sodium et le potassium,
$R^1$ représente H ou le radical méthyle,
$R^2$ représente un groupe alkylène ayant de 2 à 4 atomes de carbone,
$R^3$ représente un groupe alkyle ayant de 1 à 10 atomes de carbone,
m est un entier dans l'intervalle de 3 à 70,
n'' est un entier dans l'intervalle de 2 à 6,
y vaut 1,
x'' est un nombre dans l'intervalle de 1 à 8,
z'' est un nombre dans l'intervalle de 1 à 0,075, et

où les groupes ayant les indices x'', y et z'' sont présents dans un ordre relatif hétérogène.

2. Procédé selon la revendication 1, caractérisé en ce qu'on utilise un copolymère de formule générale (I) dans laquelle

X représente Na,
$R^1$ représente H et
$R^2$ représente un groupe éthylène.

3. Procédé de traitement d'un circuit de pasteurisation du lait, caractérisé en ce que l'on introduit dans le circuit de pasteurisation du lait de 0,05 ppm à 10 ppm d'un copolymère statistique soluble dans l'eau, essentiellement non-réticulé, ayant la formule générale (I) donnée dans la revendication 1

4. Composition pour le traitement d'un circuit essentiellement aqueux, pour inhiber le dépôt de précipités choisis dans le groupe comprenant le phosphate de calcium, le carbonate de calcium, le sulfate de calcium, le sulfate de baryum, le phosphate de magnésium, l'hydroxide de magnésium, le silicate de calcium, le silicate de magnésium, l'oxyde de fer, l'hydroxyde de zinc, le phosphate de zinc, le fluorure de calcium, l'oxalate de calcium et leurs mélanges, caractérisée en ce que ladite composition comprend un copolymère

a) de l'acide acrylique ou de l'acide méthacrylique,
b) de l'acrylamide ou du méthacrylamide, et
c) d'un acrylate d'alcoxyalkyle ou d'un méthacrylate d'alcoxyalkyle,

ayant la formule générale (I)

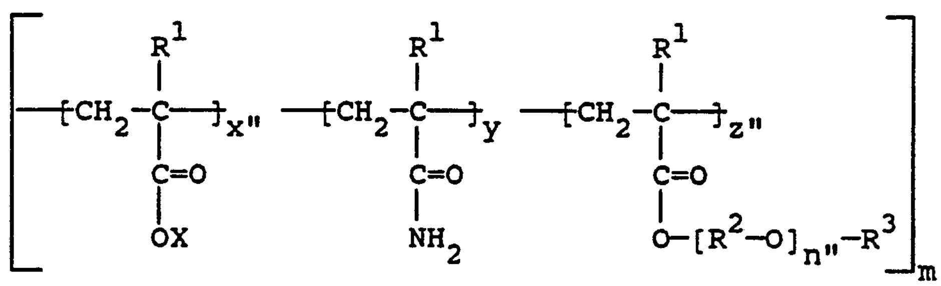

(I)

dans laquelle

X représente H, $NH_4$ ou un métal alcalin choisi dans le groupe comprenant le sodium et le potassium,
$R^1$ représente H ou le radical méthyle,
$R^2$ représente un groupe alkylène ayant de 2 à 4 atomes de carbone,
$R^3$ représente un groupe alkyle ayant de 1 à 10 atomes de carbone,

m est un entier dans l'intervalle de 3 à 70,
n'' est un entier dans l'intervalle de 2 à 6,
y vaut 1,
x'' est un nombre dans l'intervalle de 1 à 8,
z'' est un nombre dans l'intervalle de 1 à 0,075, et
où les groupes ayant les indices x'', y et z'' sont présents dans un ordre relatif hétérogène.

5. Composition selon la revendication 4, caractérisée en ce que le copolymère est représenté par la formule générale (I) dans laquelle
$R^1$ représente H,
$R^2$ représente un groupe éthylène et
$R^3$ représente un groupe éthyle.

6. Composition selon les revendications 4 et 5, caractérisée en ce que ledit copolymère a une masse moléculaire dans l'intervalle de 2000 à 50000.

7. Composition selon les revendications 4 et 5, caractérisée en ce qu'elle se présente sous la forme d'une solution aqueuse du copolymère, ayant une teneur totale en matières solides de 2 à 60% en poids, avec un pH dans l'intervalle de 5 à 8.

8. Utilisation de la composition selon les revendications 4 à 7 pour traiter de l'eau de procédé dans un circuit d'eau de recyclage.

9. Utilisation de la composition selon les revendications 4 à 7, pour le traitement du lait avant sa pasteurisation.